# EUROPÄISCHE PATENTSCHRIFT

(11) **EP 1 473 558 B1**
(45) Veröffentlichungstag und Bekanntmachung des Hinweises auf die Patenterteilung: **13.12.2006**
(21) Anmeldenummer: 04101152.9
(22) Anmeldetag: 19.03.2004
(51) Int. Cl.: G01M 15/00

(54) **Statistisches Auswerteverfahren für die Laufunruhe eines Verbrennungsmotors**
Method for statistical analysis of the irregular running of a combustion engine
Méthode pour analyse statistique des irregularités de fonctionnement des moteurs à combustion interne

(30) Priorität: 29.04.2003 DE 10319331
(43) Veröffentlichungstag der Anmeldung: 03.11.2004
(73) Patentinhaber: SIEMENS AKTIENGESELLSCHAFT, 80333 München (DE)
(72) Erfinder: Bauer, Bernhard, 93167, Völling (DE)

(56) Entgegenhaltungen:
- WO-A-92/11522
- DE-A1- 19 945 811

## Beschreibung

Die Erfindung betrifft ein Verfahren zur Auswertung eines die Laufunruhe eines Verbrennungsmotors repräsentierenden Signals.

Verschiedene Defekte an einem Verbrennungsmotor können zu stark verschleppten aber noch nicht aussetzenden Verbrennungen führen. Beispiele dafür sind Fehler am Drallklappen- oder Tumbleklappensystem im Ansaugbereich des Motors. Derartige Systeme sind je nach Brennverfahren notwendig, um eine bestimmte Ladungsbewegung zu erzeugen, die wiederum Voraussetzung für eine stabile Verbrennung ist. Bei einer falschen Stellung dieser Klappensysteme, die beispielsweise durch eine fehlerhafte Kraftübertragung vom Stellantrieb zur Klappenmechanik verursacht werden kann, kann es zu den erwähnten verschleppten, aber noch nicht aussetzenden Verbrennungen kommen, und zwar über einen großen Kennfeldbereich des Verbrennungsmotors.

Moderne Motorsteuersysteme sind bereits dazu in der Lage, Diagnoseverfahren durchzuführen, mit denen Verbrennungsaussetzer erkannt werden können. Bei bestimmten Aussetzerraten muss auf einen Fehler geschlossen werden und der Fehler gegebenenfalls gespeichert und/oder eine Fehleranzeige im Cockpit aktiviert werden.

Viele der bekannten Verfahren zur Erkennung von Verbrennungsaussetzern basieren auf der Auswertung der sogenannten Laufunruhe des Verbrennungsmotors. Die Laufunruhe wird im Wesentlichen aus dem Vergleich der von aufeinanderfolgenden Arbeitsspielen des Verbrennungsmotors stammenden Segmentzeiten gebildet, wobei die Segmentzeit bei einem 4-Zylindermotor der für eine halbe Kurbelwellenumdrehung benötigten Zeit ent spricht. Bei Verbrennungsaussetzern weichen die Segmentzeiten stark voneinander ab, was sich wiederum in einer größeren Abweichung des Laufunruhewertes von Null äußert (W097/22786).

Bei den bekannten Verfahren zur Erkennung von Verbrennungsaussetzern wird der Laufunruhewert mit entsprechenden motorbetriebspunktabhängigen Schwellenwerten verglichen, und bei einer Überschreitung des Schwellenwertes wird ein Aussetzer diagnostiziert. Die Schwellenwerte müssen dabei so abgestimmt sein, dass eine sichere Unterscheidung Aussetzer ja/nein gewährleistet ist. Eine verschleppte, aber noch nicht aussetzende Verbrennung kann mit dem bekannten Verfahren nicht erkannt werden, da bei einer verschleppten Verbrennung nur eine vergleichsweise geringe Laufunruhe vorliegt.

Der Erfindung liegt die Aufgabe zugrunde, die gattungsgemäßen Verfahren derart weiterzubilden, dass auch eine verschleppte Verbrennung erkannt werden kann.

Diese Aufgabe wird durch die im Anspruch 1 angegebenen Merkmale gelöst.

Vorteilhafte Ausgestaltungen und Weiterbildungen der Erfindung ergeben sich aus den abhängigen Ansprüchen.

Das erfindungsgemäße Verfahren baut auf dem gattungsgemäßen Stand der Technik dadurch auf, dass es die folgenden Schritte umfasst:
- Vorsehen einer Mehrzahl von Zählern,
- Zuordnen der Zähler zu Kennfeldbereichen des Verbrennungsmotors,
- Erfassen des aktuellen Kennfeldbereiches des Verbrennungsmotors, und
- Inkrementieren des dem aktuellen Kennfeldbereich zugeordneten Zählers um ein Inkrement, wenn das die Laufunruhe des Verbrennungsmotors repräsentierende Signal einen ersten Schwellenwert übersteigt.

Durch das erfindungsgemäße Verfahren wird das die Laufunruhe des Verbrennungsmotors repräsentierende Signal statistisch ausgewertet und es ist insbesondere möglich, eine verschleppte aber noch nicht aussetzende Verbrennung über die Zählerstände zu detektieren.

Weitere Vorteile der Erfindung sind, dass
- Bereiche des Motorkennfeldes, in denen das die Laufunruhe repräsentierende Signal grundsätzlich höher (oder niedriger) als in anderen Betriebs- beziehungsweise Kennfeldbereichen ist (zum Beispiel in der Nähe der Motornulllast) zusammengefasst werden können, wodurch sich spezifische (kennfeldbereichselektive) Erhöhungen in der Laufunruhe nur auf einen Zähler auswirken,
- durch die Verwendung von mehreren Zählern, die vorzugsweise über den gesamten Kennfeldbereich verteilt sind, kurzfristige Störungen in dem die Laufunruhe repräsentierenden Signal (beispielsweise durch starke Drehzahlgradienten verursacht) sich nur kurzfristig in wenigen Zählern auswirken, wodurch ein irrtümliches auf einen Fehler schließen vermieden werden kann,
- durch die Verwendung von mehreren bestimmten Kennfeldbereichen zugeordneten Zählern, die über den gesamten Kennfeldbereich oder auch nur über bestimmte Bereiche des Kennfeldbereiches verteilt sind, eine nur begrenzt auftretende erhöhte Laufunruhe sicher erkannt werden kann,
- eine durch andere Effekte (beispielsweise ein zu mageres Kraftstoff-Luft-Gemisch) in nur begrenzten Kennfeldberei chen auftretende erhöhte Laufunruhe herausgefiltert werden kann, um ein irrtümliches auf einen Fehler schließen zu vermeiden, und
- die Kennfeldbereiche flexibel und effektiv definiert werden können, insbesondere wenn zu diesem Zweck eine zweidimensionale Tabelle eingesetzt wird, was später noch näher erläutert wird.

Bei bevorzugten Ausführungsformen umfasst das erfindungsgemäße Verfahren den folgenden weiteren Schritt:
- Dekrementieren des dem aktuellen Kennfeldbereich zugeordneten Zählers um ein Dekrement, wenn das die Laufunruhe des Verbrennungsmotors repräsentierende Signal den ersten Schwellenwert nicht übersteigt.

Auf diese Weise wird sichergestellt, dass sich nur sporadisch auftretende erhöhte Laufunruhewerte im Laufe der Zeit nicht übermäßig auswirken.

Bei einer bevorzugten Weiterbildung umfasst das erfindungsgemäße Verfahren den folgenden weiteren Schritt:
- Vergleichen des Zählerstandes des Zählers mit einem zweiten Schwellenwert, um festzustellen, ob in dem Kennfeldbereich ein Laufunruhefehler aufgetreten ist.

Durch eine geeignete Wahl des ersten und des zweiten Schwellenwertes kann dabei sichergestellt werden, dass nur dann davon ausgegangen wird, dass in einem jeweiligen Kennfeldbereich ein Fehler aufgetreten ist, wenn der erste Schwellenwert mehrfach überschritten wurde.

Vorzugsweise umfasst das erfindungsgemäße Verfahren auch den folgenden weiteren Schritt:
- Erfassen, in wie vielen Kennfeldbereichen zumindest einmal ein Laufunruhefehler aufgetreten ist.

Dies kann beispielsweise erfolgen, indem für jeden Kennfeldbereich ein setzbares Fehlerbit vorgesehen und erfasst wird, wenn ein derartiges Fehlerbit gesetzt wird.

In diesem Zusammenhang ist vorzugsweise auch der folgende weitere Verfahrensschritt vorgesehen:
- Schließen auf einen allgemeinen Laufunruhefehler, wenn die Anzahl der Kennfeldbereiche, in denen zumindest einmal ein Laufunruhefehler aufgetreten ist, einen dritten Schwellenwert übersteigt.

Beim Vorliegen eines allgemeinen Laufunruhefehlers kann ein weiteres Fehlerbit gesetzt werden, das vorzugsweise nichtflüchtig gespeichert wird. Dabei wird bevorzugt, dass nur im Falle eines allgemeinen Laufunruhefehlers weitere Maßnahmen ergriffen werden.

In diesem Zusammenhang kann insbesondere der folgende weitere Verfahrensschritt vorgesehen sein:
- Starten von zumindest einem weiteren Diagnoseverfahren, wenn auf einen allgemeinen Laufunruhefehler geschlossen wurde.

Bei dem weiteren Diagnoseverfahren kann es sich insbesondere um ein verhältnismäßig aufwendiges Diagnoseverfahren handeln, beispielsweise ein weiteres Diagnoseverfahren, das das Fahrverhalten des Kraftfahrzeugs beeinflusst und das daher nur dann durchgeführt werden soll, wenn dies unbedingt erforderlich ist.

Bei besonders bevorzugten Ausführungsformen des erfindungsgemäßen Verfahrens ist vorgesehen, dass die Kennfeldbereiche in Abhängigkeit von der Drehzahl und/oder der Last des Verbrennungsmotors festgelegt sind. In diesem Zusammenhang wird es als besonders vorteilhaft erachtet, wenn die Zähler über eine zweidimensionale Tabelle in Abhängigkeit von der Drehzahl und der Last des Verbrennungsmotors definiert werden.

Im Zusammenhang mit dem erfindungsgemäßen Verfahren wird weiterhin bevorzugt, dass der erste Schwellenwert zumindest für einige, vorzugsweise jedoch für alle Kennfeldbereiche konstant ist. Insbesondere wenn das die Laufunruhe des Verbrennungsmotors repräsentierende Signal im Wesentlichen drehzahlund lastunabhängig ist, kann der erste Schwellenwert für alle Kennfeldbereich gleich angesetzt werden.

Zusätzlich oder alternativ kann vorgesehen sein, dass der erste Schwellenwert zumindest für einige Kennfeldbereiche spezifisch festgelegt ist.

Eine bevorzugte Weiterbildung des erfindungsgemäßen Verfahrens sieht vor, dass die Zähler bei einem Neustart des Motors und/oder bei einer Aktivierung einer Diagnosefunktion zurückgesetzt werden. Dabei werden die Zähler vorzugsweise auf den Wert Null zurückgesetzt.

Zusätzlich oder alternativ kann vorgesehen sein, dass die Zähler zurückgesetzt werden, wenn sich der Kennfeldbereich ändert. Diese Lösung kommt insbesondere in Betracht, um die Auswirkungen eines stark dynamischen Fahrstils zu kompensieren, wobei vorgesehen sein kann, dass ein derartiges Zurücksetzen der Zähler über einen Softwareschalter aktiviert oder deaktiviert werden kann.

Bei besonders bevorzugten Ausführungsformen des erfindungsgemäßen Verfahrens ist vorgesehen, dass das die Laufunruhe des Verbrennungsmotors repräsentierende Signal im Wesentlichen unabhängig von der Motordrehzahl und der Motorlast ist. Beispielsweise kann das die Laufunruhe des Verbrennungsmotors repräsentierende Signal durch die Standardabweichung der Laufunruhe oder ein ähnlich abgeleitetes Signal gebildet sein.

Eine bevorzugte Weiterbildung des erfindungsgemäßen Verfahrens sieht vor, dass Veränderungen der Zählerstände der Zähler nur zugelassen werden, wenn eine oder mehrere Diagnoseeintrittsbedingungen erfüllt sind. Auf diese Weise kann sichergestellt werden, dass in Betriebszuständen, in denen auch ohne das Vorliegen eines Fehlers erhöhte Laufunruhewerte zu erwarten sind, keine Auswertung des die Laufunruhe repräsentierenden Signals erfolgt.

In diesem Zusammenhang kann insbesondere vorgesehen sein, dass die Motor- beziehungsweise Kühlmitteltemperatur des Verbrennungsmotors eine Diagnoseeintrittsbedingung darstellt. Insbesondere bei einem Kaltstart des Verbrennungsmotors ist regelmäßig eine höhere Laufunruhe zu erwarten, weshalb das erfindungsgemäße Verfahren vorzugsweise erst nach dem Erreichen einer bestimmten Betriebstemperatur durchgeführt wird.

Bei bevorzugten Ausführungsformen des erfindungsgemäßen Verfahrens ist vorgesehen, dass das Inkrement kleiner als das Dekrement gewählt ist. Dadurch wird erreicht, dass nur sporadisch auftretende Überschreitungen des ersten Schwellenwertes nicht zum Überschreiten des zweiten Schwellenwertes führen, was auch als Entprellung bezeichnet werden kann.

Obwohl die Erfindung nicht auf eine derartige Anzahl von Zählern beschränkt ist, ist bei bevorzugten Ausführungsformen vorgesehen, dass die Anzahl der Zähler im Bereich von 5 bis 10 liegt.

Jede Vorrichtung, insbesondere jede Motorsteuerung, die zur Durchführung einer Ausführungsform des erfindungsgemäßen Verfahrens geeignet ist, fällt in den Schutzbereich der vorliegenden Erfindung.

Eine bevorzugte Ausführungsform der Erfindung wird nachfolgend anhand der Figuren beispielhaft erläutert.

Es zeigen:
- Figur 1: ein Flussdiagramm, das eine Ausführungsform des erfindungsgemäßen Verfahrens veranschaulicht; und
- Figur 2: eine Tabelle, die eine mögliche Zuweisung von acht Zählern zu unterschiedlichen Kennfeldbereichen des Verbrennungsmotors veranschaulicht.

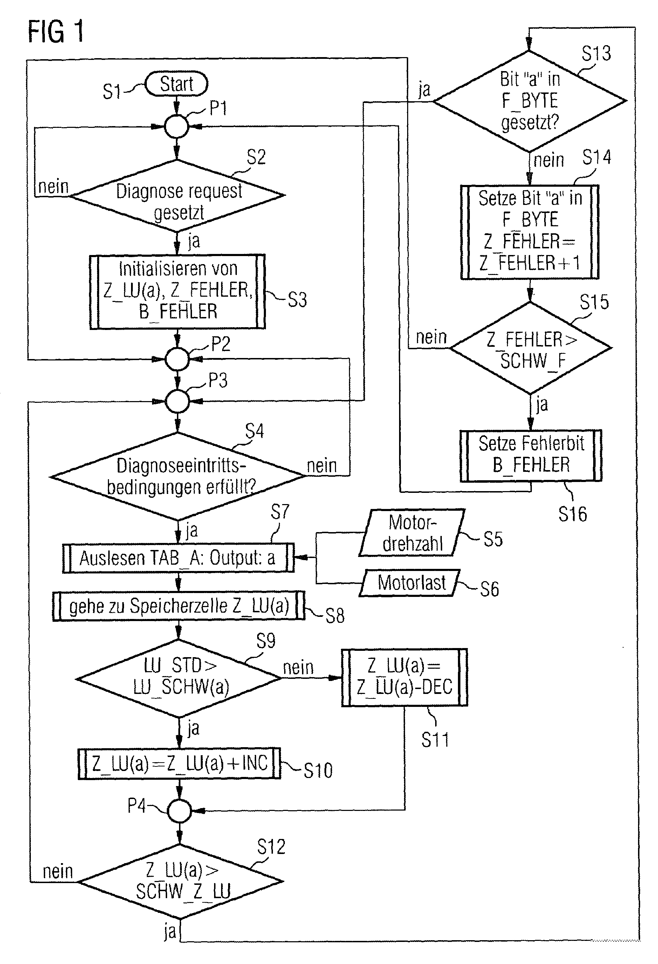

Das in Figur 1 dargestellte Verfahren beginnt beim Schritt S1. Anschließend wird über den Punkt P1 zum Schritt S2 fortgeschritten, in dem überprüft wird, ob eine Diagnoseanforderung vorliegt. Liegt keine Diagnoseanforderung vor, so wird zum Punkt P1 zurückverzweigt. Anderenfalls wird beim Schritt S3 fortgefahren, in dem eine Initialisierung der Zähler Z_LU(a), eines Fehlerzählers Z_FEHLER und eines Fehlerbits B_FEHLER erfolgt. Anschließend wird über die Punkte P2 und P3 zum Schritt S4 fortgeschritten, in dem überprüft wird, ob die Diagnoseeintrittsbedingungen erfüllt sind. Dabei stellt beispielsweise das Erreichen einer bestimmten Kühlmitteltemperatur eine typische Diagnoseeintrittsbedingung dar. Sofern noch nicht alle Diagnoseeintrittsbedingungen erfüllt sind, wird zurück zum Punkt P2 verzweigt. Anderenfalls wird im Schritt S7 eine Tabelle TAB A ausgelesen, in der definiert ist, welcher Zähler welchem Kennfeldbereich zugeordnet ist. In den Schritten S5 und S6 wird der aktuelle Kennfeldbereich a erfasst, der den zugeordneten Zähler Z LU(a) festlegt. Anschließend wird im Schritt S8 auf den ausgewählten Zähler Z_LU(a) zugegriffen, der durch eine Speicherzelle gebildet ist. Danach wird im Schritt S9 überprüft, ob das die Laufunruhe des Verbrennungsmotors repräsentierende Signal LU_STD größer als ein erster Schwellenwert LU_SCHW(a) ist. Der erste Schwellenwert LU_SCHW(a) ist im dargestellten Fall kennfeldbereichspezifisch, es kommen jedoch ebenfalls Ausführungsfor men in Betracht, bei denen dies nicht der Fall ist. Wird im Schritt S9 erkannt, dass der erste Schwellenwert LU_SCHW(a) überschritten wurde, so wird der dem aktuellen Kennfeldbereich zugeordnete Zähler Z_LU(a) im Schritt S10 um das Inkrement INC erhöht. Anderenfalls wird der Zählerstand des Zählers Z_LU(a) im Schritt S11 um ein Dekrement DEC verringert. In beiden Fällen wird anschließend über den Punkt P4 zum Schritt S12 fortgeschritten. Im Schritt S12 wird überprüft, ob der Zählerstand des dem aktuellen Kennfeldbereich a zugeordneten Zählers Z_LU(a) größer als ein zweiter Schwellenwert SCHW_Z_LU ist. Falls dies nicht der Fall ist, wird zurück zum Punkt P3 verzweigt. Anderenfalls wird davon ausgegangen, dass in dem aktuellen Kennfeldbereich a ein Laufunruhefehler aufgetreten ist und es wird zum Schritt S13 verzweigt. Im Schritt S13 wird überprüft, ob in einer Speicherzelle F_BYTE ein dem Kennfeldbereich a zugeordnetes Bit bereits gesetzt ist, das heißt ob in dem Kennfeldbereich a bereits früher zumindest einmal ein Fehler aufgetreten ist. Sofern das entsprechende Bit in der Speicherzelle F_BYTE bereits gesetzt ist, wird zurück zum Punkt P3 verzweigt. Anderenfalls wird im Schritt S14 das entsprechende Bit in der Speicherzelle F_BYTE gesetzt. Darüber hinaus wird ein Fehlerzähler Z_FEHLER im Schritt S14 um Eins erhöht. Der Zählerstand des Fehlerzählers Z_FEHLER gibt somit die Anzahl der Kennfeldbereiche an, in denen zumindest einmal ein Laufunruhefehler aufgetreten ist. Anschließend wird im Schritt S15 überprüft, ob der Zählerstand des Fehlerzählers Z_FEHLER größer als ein dritter Schwellenwert SCHW_F ist. Nur wenn dies der Fall ist, wird im Schritt S16 das Fehlerbit B_FEHLER gesetzt, das einen allgemeinen Laufunruhefehler angibt. Durch das Setzen des Fehlerbits B_FEHLER kann beispielsweise veranlasst werden, dass weitere aufwendigere Diagnoseverfahren durchgeführt werden. Nachdem das Fehlerbit B_FEHLER im Schritt S16 gesetzt wurde, wird zum Punkt P1 zurückgekehrt. Falls im Schritt S15 festgestellt wurde, dass der Zählerstand des Fehlerzählers Z_FEHLER nicht größer als der dritte Schwellenwert SCHW_F ist, wird zurück zum Punkt P2 verzweigt.

Bei einer Abwandlung des in Figur 1 dargestellten Verfahrens kann vorgesehen sein, dass im Bereich der Schritte S5 bis S8 ein nicht dargestelltes Zurücksetzen aller Zähler Z LU(a) jedes mal dann erfolgt, wenn sich der Kennfeldbereich a ändert.

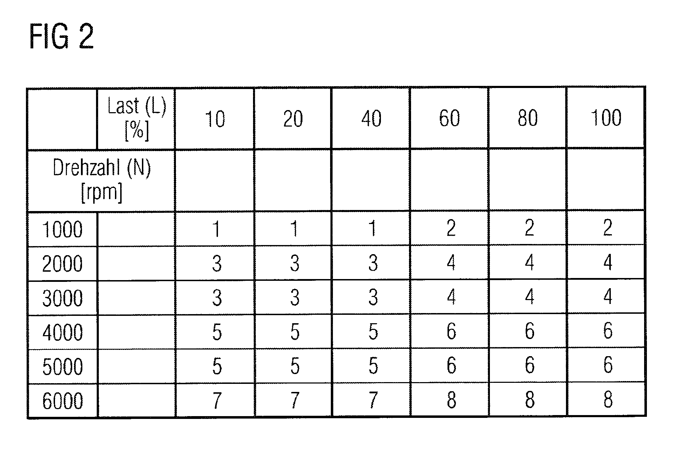

Figur 2 zeigt eine Tabelle, die eine mögliche Zuweisung von acht Zählern zu unterschiedlichen Kennfeldbereichen des Verbrennungsmotors veranschaulicht. Die Tabelle ist dabei so zu lesen, dass der Tabellenwert zum Beispiel bei N = 2000 und L = 40 gültig ist von N = 2000 bis zur nächsthöheren Stützstelle N = 3000 und von L = 40 bis zur nächsthöheren Stützstelle L = 60. Obwohl den acht Zählern Z_LU(1) bis Z_LU(8) gemäß der Darstellung von Figur 2 jeweils zusammenhängende Kennfeldbereiche zugeordnet sind, kommen auch Ausführungsformen in Betracht, bei denen dies nicht der Fall ist.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

## Patentansprüche

1. Verfahren zur Auswertung eines die Laufunruhe eines Verbrennungsmotors repräsentierenden Signals (LU_STD),
**dadurch gekennzeichnet,**
**dass** es die folgenden Schritte umfasst:
- Vorsehen einer Mehrzahl von Zählern (Z_LU(a)),
- Zuordnen der Zähler (Z_LU(a)) zu Kennfeldbereichen (a) des Verbrennungsmotors,
- Erfassen des aktuellen Kennfeldbereiches (a) des Verbrennungsmotors, und
- Inkrementieren des dem aktuellen Kennfeldbereich (a) zugeordneten Zählers (Z_LU(a)) um ein Inkrement (INC), wenn das die Laufunruhe des Verbrennungsmotors repräsentierende Signal (LU_STD) einen ersten Schwellenwert (LU_SCHW(a)) übersteigt.

2. Verfahren nach Anspruch 1,
**dadurch gekennzeichnet,**
**dass** es den folgenden weiteren Schritt umfasst:
- Dekrementieren des dem aktuellen Kennfeldbereich zugeordneten Zählers um ein Dekrement (DEC), wenn das die Laufunruhe des Verbrennungsmotors repräsentierende Signal (LU_STD) den ersten Schwellenwert (LU_SCHW(A)) nicht übersteigt.

3. Verfahren nach Anspruch 1 oder 2,
**dadurch gekennzeichnet,**
**dass** es den folgenden weiteren Schritt umfasst:
- Vergleichen des Zählerstandes des Zählers (Z LU(a)) mit einem zweiten Schwellenwert (SCHW_Z_LU), um festzustel len, ob in dem Kennfeldbereich (a) ein Laufunruhefehler aufgetreten ist.

4. Verfahren nach Anspruch 3,
**dadurch gekennzeichnet,**
**dass** es den folgenden weiteren Schritt umfasst:
- Erfassen, in wie vielen Kennfeldbereichen (a) zumindest einmal ein Laufunruhefehler aufgetreten ist.

5. Verfahren nach Anspruch 4,
**dadurch gekennzeichnet,**
**dass** es den folgenden weiteren Schritt umfasst:
- Schließen auf einen allgemeinen Laufunruhefehler, wenn die Anzahl der Kennfeldbereiche (a), in denen zumindest einmal ein Laufunruhefehler aufgetreten ist, einen dritten Schwellenwert (SCHW_F) übersteigt.

6. Verfahren nach Anspruch 5,
**dadurch gekennzeichnet,**
**dass** es den folgenden weiteren Schritt umfasst:
- Starten von zumindest einem weiteren Diagnoseverfahren, wenn auf einen allgemeinen Laufunruhefehler geschlossen wurde.

7. Verfahren nach einem der vorhergehenden Ansprüche,
**dadurch gekennzeichnet,**
**dass** die Kennfeldbereiche (a) in Abhängigkeit von der Drehzahl und/oder der Last des Verbrennungsmotors festgelegt sind.

8. Verfahren nach einem der vorhergehenden Ansprüche,
**dadurch gekennzeichnet,**
**dass** der erste Schwellenwert (LU_SCHW(a)) zumindest für einige, vorzugsweise jedoch für alle Kennfeldbereiche (a) konstant ist.

9. Verfahren nach einem der vorhergehenden Ansprüche,
**dadurch gekennzeichnet,**
**dass** der erste Schwellenwert (LU_SCHW(a)) zumindest für einige Kennfeldbereiche (a) spezifisch festgelegt ist.

10. Verfahren nach einem der vorhergehenden Ansprüche,
**dadurch gekennzeichnet,**
**dass** die Zähler (Z_LU(a)) bei einem Neustart des Motors
und/oder bei einer Aktivierung einer Diagnosefunktion zurückgesetzt werden.

11. Verfahren nach einem der vorhergehenden Ansprüche,
**dadurch gekennzeichnet,**
**dass** die Zähler (Z_LU(a)) zurückgesetzt werden, wenn sich der Kennfeldbereich (a) ändert.

12. Verfahren nach einem der vorhergehenden Ansprüche,
**dadurch gekennzeichnet,**
**dass** das die Laufunruhe des Verbrennungsmotors repräsentierende Signal (LU_STD) im Wesentlichen unabhängig von der Motordrehzahl und der Motorlast ist.

13. Verfahren nach einem der vorhergehenden Ansprüche,
**dadurch gekennzeichnet,**
**dass** Veränderungen der Zählerstände der Zähler (Z_LU(a)) nur zugelassen werden, wenn eine oder mehrere Diagnoseeintrittsbedingungen erfüllt sind.

14. Verfahren nach Anspruch 13,
**dadurch gekennzeichnet,**
**dass** die Motor- beziehungsweise Kühlmitteltemperatur des Verbrennungsmotors eine Diagnoseeintrittsbedingung darstellt.

15. Verfahren nach einem der Ansprüche 2 bis 14,
**dadurch gekennzeichnet,**
**dass** das Inkrement (INC) kleiner als das Dekrement (DEC) gewählt ist.

16. Verfahren nach einem der vorhergehenden Ansprüche,
**dadurch gekennzeichnet,**
**dass** die Anzahl der Zähler (Z_LU(A)) im Bereich von 5 bis 10 liegt.

17. Vorrichtung, insbesondere Motorsteuerung, die zur Durchführung des Verfahrens nach einem der vorhergehenden Ansprüche ausgelegt ist.

## Claims

1. Method for analysing a signal (LU_STD) which represents the running irregularity of an internal combustion engine,
**characterised in that**
it incorporates the following steps:
- provision of a multiplicity of counters (Z_LU(a)),
- assignment of the counters (Z_LU(a)) to regions (a) of characteristic curves for the internal combustion engine,
- detection of the current characteristic curve region (a) for the internal combustion engine, and
- incrementation by one incremental unit (INC) of the counter (Z_LU(a)) assigned to the current characteristic curve region (a) if the signal (LU_STD) representing the running irregularity of the internal combustion engine exceeds a first threshold (LU_SCHW(a)).

2. Method in accordance with claim 1,
**characterised in that**
it incorporates the following additional step:
- decrementation by one decremental unit (DEC) of the counter assigned to the current characteristic curve region if the signal (LU_STD) representing the running irregularity of the internal combustion engine does not exceed the first threshold value (LU_SCHW(A)).

3. Method in accordance with claim 1 or 2,
**characterised in that**
it incorporates the following additional step:
- comparison of the counter reading for the counter (Z_LU(a)) with a second threshold value (SCHW_Z_LU), in order to determine whether a running irregularity fault has occurred in characteristic curve region (a).

4. Method in accordance with claim 3,
**characterised in that**
it incorporates the following additional step:
- detection of the number of characteristic curve regions (a) in which at least one running irregularity fault has occurred.

5. Method in accordance with claim 4,
**characterised in that**
it incorporates the following additional step:
- inference that there is a general running irregularity fault if the number of characteristic curve regions (a), in which a running irregularity fault has occurred at least once, exceeds a third threshold value (SCHW_F).

6. Method in accordance with claim 5,
**characterised in that**
it incorporates the following additional step:
- the starting of at least one additional diagnostic method if a general running irregularity fault has been inferred.

7. Method in accordance with one of the preceding claims,
**characterised in that**
the characteristic curve regions (a) are defined as a function of the rotational speed and/or the load on the internal combustion engine.

8. Method in accordance with one of the preceding claims,
**characterised in that**
the first threshold value (LU_SCHW(a)) is constant for at least some and preferably all of the characteristic curve regions (a).

9. Method in accordance with one of the preceding claims,
**characterised in that**
the first threshold value (LU_SCHW(a) is defined specifically for at least some of the characteristic curve regions (a).

10. Method in accordance with one of the preceding claims,
**characterised in that**
the counters (Z_LU(a)) are reset when the engine is restarted and/or when a diagnostic function is activated.

11. Method in accordance with one of the preceding claims,
**characterised in that**
the counters (Z_LU(a)) are reset when the characteristic curve region (a) changes.

12. Method in accordance with one of the preceding claims,
**characterised in that**
the signal (LU_STD) which represents the running irregularity of the internal combustion engine is essentially independent of the engine rotational speed and the engine load.

13. Method in accordance with one of the preceding claims,
**characterised in that**
changes are only permitted to the counter reading for the counter (Z_LU(a)) if one or more diagnosis initiation conditions are satisfied.

14. Method in accordance with claim 13,
**characterised in that**
the engine or coolant temperature for the internal combustion engine represents a diagnosis initiation condition.

15. Method in accordance with one of the claims 2 to 14,
**characterised in that**
the increment (INC) is chosen to be smaller than the decrement (DEC).

16. Method in accordance with one of the preceding claims,
**characterised in that**
the number of counters (Z_LU(a)) lies in the range from 5 to 10.

17. Device, in particular an engine control unit, which is arranged for carrying out the method in accordance with one of the preceding claims.

## Revendications

1. Procédé d'interprétation d'un signal (LU_STD) représentant l'irrégularité de fonctionnement d'un moteur à combustion interne, **caractérisé en ce qu'**il comprend les étapes suivantes :
- prévoir une pluralité de compteur (Z_LU(a)),
- affecter les compteurs (Z_LU(a)) aux zones (a) du diagramme caractéristique du moteur à combustion interne,
- détecter la zone (a) actuelle du diagramme caractéristique du moteur à combustion interne, et
- incrémenter d'un incrément (INC) le compteur (Z_LU(a)) associé à la zone (a) actuelle du diagramme caractéristique du moteur à combustion interne lorsque le signal (LU_STD) qui représente l'irrégularité de fonctionnement du moteur à combustion interne dépasse une première valeur de seuil (LU_SEUIL(a)).

2. Procédé selon la revendication 1, **caractérisé en ce qu'**il comprend l'étape supplémentaire suivante :
- décrémenter le compteur associé à la zone actuelle du diagramme caractéristique d'un décrément (DEC) lorsque le signal (LU_STD) représentant l'irrégularité de fonctionnement du moteur à combustion interne ne dépasse pas la première valeur de seuil (LU_SEUIL(A)).

3. Procédé selon la revendication 1 ou 2, **caractérisé en ce qu'**il comprend l'étape supplémentaire suivante :
- comparer l'état de comptage actuel du compteur (Z_LU(a)) avec une deuxième valeur de seuil (SEUIL_Z_LU) pour définir si un défaut de type irrégularité de fonctionnement s'est produit dans la zone (a) du diagramme caractéristique.

4. Procédé selon la revendication 3, **caractérisé en ce qu'**il comprend l'étape supplémentaire suivante :
- détecter le nombre de zones (a) du diagramme caractéristique dans lesquelles il s'est produit au moins une fois un défaut de type irrégularité de fonctionnement.

5. Procédé selon la revendication 4, **caractérisé en ce qu'**il comprend l'étape supplémentaire suivante :
- conclure à la présence d'un défaut général de type irrégularité de fonctionnement lorsque le nombre de zones (a) du diagramme caractéristique dans lesquelles s'est produit au moins une fois un défaut de type irrégularité de fonctionnement dépasse une troisième valeur de seuil (SEUIL_F).

6. Procédé selon la revendication 5, **caractérisé en ce qu'**il comprend l'étape supplémentaire suivante :
- démarrer au moins un procédé de diagnostic supplémentaire s'il a été conclu à un défaut général de type irrégularité de fonctionnement.

7. Procédé selon l'une des revendications précédentes, **caractérisé en ce que** les zones (a) du diagramme caractéristique sont déterminées en fonction de la vitesse de rotation et/ou de la charge du moteur à combustion interne.

8. Procédé selon l'une des revendications précédentes, **caractérisé en ce que** la première valeur de seuil (LU_SEUIL(a)) est constante au moins pour quelques zones (a) du diagramme caractéristique, de préférence cependant pour toutes.

9. Procédé selon l'une des revendications précédentes, **caractérisé en ce que** la première valeur de seuil (LU_SEUIL(a)) est fixée spécifiquement pour quelques zones (a) du diagramme caractéristique.

10. Procédé selon l'une des revendications précédentes, **caractérisé en ce que** les compteurs (Z_LU(a)) sont réinitialisés lors d'un redémarrage du moteur et/ou lors d'une activation d'une fonction de diagnostic.

11. Procédé selon l'une des revendications précédentes, **caractérisé en ce que** les compteurs (Z_LU(a)) sont réinitialisés lorsque la zone (a) du diagramme caractéristique change.

12. Procédé selon l'une des revendications précédentes, **caractérisé en ce que** le signal (LU_STD) représentant l'irrégularité de fonctionnement du moteur à combustion interne est pour l'essentiel indépendant de la vitesse de rotation du moteur et de la charge du moteur.

13. Procédé selon l'une des revendications précédentes, **caractérisé en ce que** les modifications des états de comptage des compteurs (Z_LU(a)) ne sont autorisées que lorsqu'une ou plusieurs conditions d'entrée en diagnostic sont remplies.

14. Procédé selon la revendication 13, **caractérisé en ce que** la température du moteur ou du liquide de refroidissement du moteur à combustion interne représente une condition d'entrée en diagnostic.

15. Procédé selon l'une des revendications 2 à 14, **caractérisé en ce que** l'incrément (INC) est choisi inférieur au décrément (DEC).

16. Procédé selon l'une des revendications précédentes, **caractérisé en ce que** le nombre de compteurs (Z_LU(A)) est compris dans la plage de 5 à 10.

17. Dispositif, notamment commande de moteur qui est conçu pour la mise en oeuvre du procédé selon l' une des revendications précédentes.
